# FASCICULE DE BREVET EUROPEEN

(11) **EP 1 580 763 B1**
(45) Date de publication et mention de la délivrance du brevet: **06.07.2011**
(21) Numéro de dépôt: 05100387.9
(22) Date de dépôt: 21.01.2005
(51) Int. Cl.: G21F 5/012

(54) **Dispositif de rangement prévu pour être placé dans un emballage destiné au transport de matières radioactives**
Speichervorrichtung zum Einschluss in einem für den Transport von radioaktiven Stoffen bestimmten Behälter
Rack arrangement for being incorporated in a container for the shipment of radioactive materials

(30) Priorité: 23.01.2004 FR 0450122
(43) Date de publication de la demande: 28.09.2005
(73) Titulaire: TN International, 78180 Montigny Le Bretonneux (FR)
(72) Inventeur: HERMOUET, Yann, 78280, GUYANCOURT (FR); BIGUET, Alexandre, 93360, NEUILLY PLAISANCE (FR)
(74) Mandataire: Poulin, Gérard

(56) Documents cités:
- EP-A- 0 762 433
- FR-A- 2 346 652
- PATENT ABSTRACTS OF JAPAN vol. 0144, no. 68 (P-1115), 12 octobre 1990 (1990-10-12) & JP 02 186300 A (KOBE STEEL LTD), 20 juillet 1990 (1990-07-20)
- PATENT ABSTRACTS OF JAPAN vol. 0142, no. 83 (P-1063), 19 juin 1990 (1990-06-19) & JP 02 083499 A (MITSUBISHI METAL CORP), 23 mars 1990 (1990-03-23)

## Description

### DOMAINE TECHNIQUE

La présente invention se rapporte de façon générale à un dispositif de rangement prévu pour être placé dans un emballage destiné au transport de matières radioactives, telles que par exemple des assemblages de combustible nucléaire ayant été précédemment irradiés dans un réacteur nucléaire.

### ETAT DE LA TECHNIQUE ANTERIEURE

De tels dispositifs de rangement, également appelés « paniers » ou « râteliers » de rangement, présentent une pluralité de logements à l'intérieur desquels peuvent être placés des assemblages de combustible nucléaire irradiés, en vue d'être transportés.

Dans l'industrie nucléaire, les assemblages de combustible constituent la source d'énergie des centrales nucléaires, et sont par conséquent amenés à être stockés et/ou déplacés durant une période de temps s'étendant entre la fin de leur utilisation en tant que source d'énergie de la centrale, et leur entreposage dans des sites de retraitement.

En effet, les dispositifs de rangement trouvent une application pour le transport de ces assemblages de combustible irradiés, par exemple entre les centrales nucléaires et les sites de retraitement.

Les dispositifs de rangement de ce type doivent remplir diverses fonctions. Ces fonctions comprennent notamment la résistance mécanique et le calage des matières radioactives, ainsi que l'aptitude à être manutentionné.

De plus, selon la nature des matières radioactives, le dispositif de rangement doit assurer différentes fonctions liées à la sûreté nucléaire du transport ou du stockage. Parmi ces fonctions, on citera principalement la nécessité d'évacuer le flux de chaleur produit par les matières contenues dans le dispositif et le contrôle de la criticité nucléaire, lorsque ces matières sont des matières fissiles susceptibles de provoquer une réaction en chaîne.

La fonction de résistance mécanique a pour but de maintenir la géométrie du dispositif lors des opérations de manutention, sous l'effet des accélérations rencontrées au cours du transport, mais aussi en cas de choc ou de chute accidentelle, pour conserver le contrôle de la criticité nucléaire dans de telles circonstances. Notons par ailleurs que ces configurations font l'objet d'épreuves réglementaires.

Les dispositifs de rangement d'assemblages de combustible nucléaire disposent habituellement d'une pluralité de logements adjacents, chacun présentant une section transversale carrée ou hexagonale, afin de permettre l'introduction et le maintien d'un assemblage de combustible de forme complémentaire à l'intérieur de ce logement.

De l'art antérieur, il est connu et avantageux de réaliser une structure centrale du dispositif de rangement à l'aide d'éléments de paroi assemblés entre eux et fabriqués en alliage d'aluminium et de bore, ce matériau étant retenu en raison de sa capacité à absorber les neutrons, et à assurer par conséquent le contrôle de la sûreté nucléaire. Il est noté que cette structure centrale permet de constituer entièrement la paroi latérale du/des logements centraux du dispositif, mais ne constitue que partiellement la paroi latérale des logements périphériques, qui restent ouverts latéralement vers l'extérieur de ce même dispositif.

Ainsi, il est également prévu une pluralité d'éléments de paroi périphériques agencés autour et au contact de la structure centrale. Ces éléments de paroi périphériques, réalisés avantageusement en acier inoxydable, participent alors à constituer la paroi latérale des logements périphériques du dispositif, conjointement avec la structure centrale.

En d'autres termes, chaque logement de la structure centrale est réalisé par l'intermédiaire d'une pluralité d'éléments de paroi qui, lorsqu'ils sont assemblés, forment la paroi latérale du logement.

L'utilisation préférée de l'acier inoxydable pour réaliser ces éléments de paroi périphériques est motivée par le fait que ce matériau procure un blindage gamma complémentaire, et aussi par le fait qu'il est capable de conférer une forte rigidité au dispositif de rangement.

A ce titre, il est précisé que la caractéristique de forte rigidité du dispositif est d'autant plus bénéfique qu'elle permet au dispositif de rangement de satisfaire les exigences réglementaires de sûreté pour le transport/stockage d'assemblages de combustible nucléaire précitées.

De plus, l'utilisation combinée d'éléments de paroi en alliage d'aluminium et de bore et d'éléments de paroi en acier inoxydable permet facilement au dispositif de rangement d'être compatible avec l'exigence d'une masse maximum à respecter, cette limitation de masse étant imposée par les contraintes d'exploitation.

Néanmoins, malgré les avantages susvisés relatifs à une telle configuration, ce type de dispositif de rangement présente des inconvénients majeurs. En effet, des vis d'assemblage en acier inoxydable sont utilisées pour assurer la fixation entre des éléments de paroi de la structure centrale, et des éléments de paroi périphériques en contact avec ces mêmes éléments de paroi de la structure centrale.

Ainsi, il est évident qu'une vis en acier inoxydable vissée dans l'alliage d'aluminium d'un élément de paroi de la structure centrale ne permet pas d'appliquer une précontrainte importante, dans la mesure où une telle précontrainte provoquerait inéluctablement un endommagement du filet en alliage d'aluminium. Par conséquent, l'absence d'un serrage de forte intensité affaiblit de façon notable la rigidité globale du dispositif de rangement.

De manière encore plus contraignante, il est noté que le dispositif de rangement est soumis à des cycles thermiques en nombre élevé et d'amplitude importante, ces cycles thermiques générant alors un phénomène de dilatation différentielle conséquent entre les divers éléments de paroi, et également entre les vis en acier inoxydable et les éléments de paroi périphériques en alliage d'aluminium.

Effectivement, lors de fortes températures, la dilatation largement plus prononcée de l'alliage d'aluminium a pour conséquence de diminuer la surface de contact entre le filet de la vis en acier inoxydable et le filet en alliage d'aluminium du trou taraudé prévu dans l'élément de paroi considéré, de sorte que la liaison mécanique procurée par la vis est fortement affaiblie, voire totalement rompue lorsque la dilatation thermique est telle qu'il n'y a plus de contact entre les deux filets concernés.

Bien entendu, la perte de la liaison mécanique survenant au niveau d'une ou plusieurs vis d'assemblage peut également conduire à une rupture partielle ou totale du contact entre les deux éléments de paroi impliqués. Dans un tel cas, le transfert thermique entre ces deux éléments ne peut naturellement plus être assuré de façon satisfaisante.

Enfin, il est précisé qu'un autre inconvénient relatif à la présence d'un tel assemblage réside dans le fait que durant les fortes sollicitations thermiques, le filet en alliage d'aluminium et de bore devient relativement mou, et est donc susceptible de se déformer et de se dégrader rapidement au contact de la vis en acier inoxydable, qui elle reste rigide.

### EXPOSÉ DE L'INVENTION

L'invention a donc pour but de proposer un dispositif de rangement prévu pour être placé dans un emballage destiné au transport de matières radioactives, le dispositif comprenant une pluralité de logements s'étendant chacun selon un axe longitudinal et dont au moins l'un d'entre eux dispose d'une paroi latérale formée au moins en partie à l'aide d'un élément de paroi en acier inoxydable assemblé à un élément de paroi en aluminium ou dans l'un de ses alliages, ce dispositif remédiant au moins partiellement aux inconvénients mentionnés ci-dessus relatifs aux réalisations de l'art antérieur.

Plus précisément, le but de la présente invention est de proposer un dispositif de rangement dont le/les systèmes d'assemblage, prévus pour assurer la fixation d'un élément de paroi en acier inoxydable sur un élément de paroi en aluminium ou dans l'un de ses alliages, sont en mesure de faire face aux effets néfastes susceptibles d'être provoqués par le phénomène de dilation différentielle.

Pour ce faire, l'invention a pour objet un dispositif de rangement prévu pour être placé dans un emballage destiné au transport de matières radioactives, le dispositif comprenant une pluralité de logements s'étendant chacun selon un axe longitudinal et dont au moins l'un d'entre eux dispose d'une paroi latérale formée au moins en partie à l'aide d'un élément de paroi en acier inoxydable assemblé à un élément de paroi en aluminium ou dans l'un de ses alliages par l'intermédiaire d'au moins un système d'assemblage comportant une vis en acier inoxydable traversant cet élément de paroi en acier inoxydable et étant en butée contre celui-ci. Selon l'invention, le système d'assemblage comprend en outre une noix en acier inoxydable agencée dans un logement de noix prévu dans l'élément de paroi en aluminium ou dans l'un de ses alliages et communiquant avec un passage traversé par la vis, la noix présentant un trou taraudé coopérant avec cette vis en acier inoxydable.

Une partie de l'élément en aluminium, située entre l'autre élément de paroi en acier inoxydable et la noix en acier recevant la vis, présente un passage traversé par ladite vis et communiquant avec ledit logement.

Avantageusement, le/les systèmes d'assemblage proposés comportent chacun principalement une vis en acier inoxydable vissée dans une noix réalisée dans le même matériau, de sorte que ces deux éléments ne subissent pas de dilatation différentielle, ni les effets néfastes liés à ce phénomène. Ainsi, la/les liaisons mécaniques, assurées respectivement par le/les systèmes d'assemblage prévus entre un élément de paroi en acier inoxydable et un élément de paroi en aluminium ou dans l'un de ses alliages, restent conservées même lorsque le dispositif de rangement selon l'invention est soumis à de fortes températures.

Par ailleurs, il est précisé que lors des fortes sollicitations thermiques, les liaisons mécaniques procurées par les systèmes d'assemblage sont même renforcées. Effectivement, cela s'explique globalement par le fait que la portion de l'élément de paroi en aluminium ou dans l'un de ses alliages, située entre l'élément de paroi en acier inoxydable et la noix réalisée dans un matériau identique, a tendance à se dilater et par conséquent à contraindre encore davantage le système d'assemblage susmentionné.

A cet égard, il est également noté que le matériau spécifique utilisé pour fabriquer la vis et la noix permet d'appliquer des précontraintes extrêmement importantes, et donc de présenter un dispositif de rangement d'une très grande rigidité globale.

De préférence, la vis en acier inoxydable traverse un trou oblong prévu dans l'élément de paroi en acier inoxydable, le trou oblong présentant deux faces parallèles agencées sensiblement parallèlement à l'axe longitudinal du logement. Ainsi, la vis du système d'assemblage peut se déplacer à l'intérieur de ce trou oblong, de sorte que l'agencement particulier proposé autorise un mouvement relatif entre les deux éléments de parois selon l'axe longitudinal du logement concerné, lors des fortes sollicitations thermiques conduisant à une dilatation différentielle entre ces deux éléments.

Préférentiellement, le système d'assemblage comporte une rondelle anti-rotation interposée entre une tête de la vis en acier inoxydable et ledit élément de paroi en acier inoxydable, et/ou une rondelle de dilatation également interposée entre cette tête de vis et l'élément de paroi en acier inoxydable.

Pour obtenir un bon positionnement de la noix à l'intérieur du logement de noix, et s'assurer que le trou taraudé de la noix se situe bien en regard et dans le prolongement du passage de l'élément de paroi en aluminium ou dans l'un de ses alliages, il est possible de prévoir que cette noix comprend une saillie coopérant avec une encoche pratiquée dans le logement de noix. Naturellement, il aurait également été possible de prévoir une noix dont la forme impose un positionnement unique et adéquat à l'intérieur du logement de noix de forme complémentaire, sans sortir du cadre de l'invention.

De préférence, la noix est un cylindre de section en forme de disque, et d'axe perpendiculaire à un axe de la vis en acier inoxydable.

D'autre part, le dispositif peut comprendre une structure centrale réalisée à l'aide d'une pluralité d'éléments de paroi en aluminium ou dans l'un de ses alliages, la structure centrale constituant notamment, de façon partielle, la paroi latérale d'une pluralité de logements périphériques. De plus, la paroi latérale des logements périphériques est également constituée par des éléments de paroi périphériques en acier inoxydable.

Dans un tel cas, il est alors préféré de prévoir qu'une pluralité de systèmes d'assemblage est prévue entre chaque ensemble formé par un élément de paroi en aluminium ou dans l'un de ses alliages, et un élément de paroi périphérique en acier inoxydable en contact avec celui-ci.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective partiellement éclatée d'une partie d'un dispositif de rangement selon un mode de réalisation préféré de la présente invention ; et
- la figure 2 représente une vue agrandie et éclatée en perspective d'une partie du dispositif de rangement de la figure 1, montrant de façon détaillée un système d'assemblage équipant un ensemble formé par un élément de paroi en aluminium ou dans l'un de ses alliages, et un élément de paroi périphérique en acier inoxydable en contact avec celui-ci.

### EXPOSÉ DÉTAILLÉ DE MODES DE RÉALISATION PRÉFÉRÉS

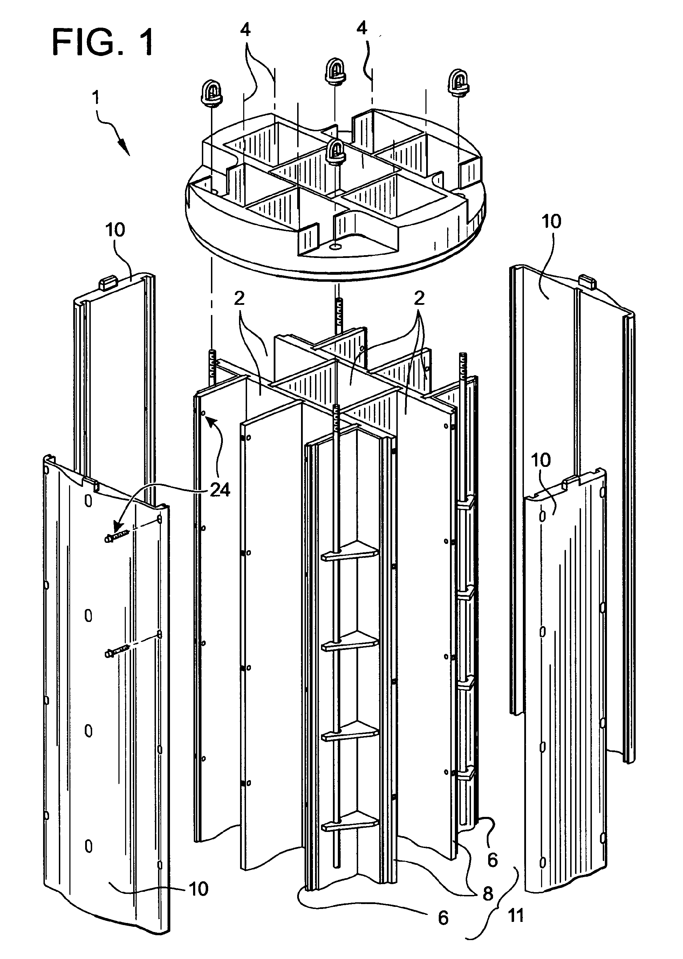

La figure 1 représente un dispositif de rangement 1 prévu pour être placé dans un emballage (non représenté) destiné au transport de matières radioactives, telles que par exemple des assemblages de combustible nucléaire (non représentés), selon un mode de réalisation préféré de la présente invention.

Comme on peut le voir sur la figure 1, le dispositif de rangement 1 comprend une pluralité de logements 2 disposés parallèlement, ces derniers s'étendant chacun selon un axe longitudinal 4. Les logements 2 sont chacun apte à recevoir au moins un assemblage de combustible de section carrée, et de préférence un seul.

Les logements 2 sont prévus de manière à être juxtaposés les uns aux autres. Ils sont réalisés par l'intermédiaire d'une pluralité d'éléments de paroi 6, 8 et 10, dont certains sont communs à plusieurs logements 2 du dispositif 1. De plus, dans ce mode de réalisation préféré, ces éléments de paroi 6, 8 et 10 prennent chacun grossièrement la forme d'une plaque. Lorsqu'ils sont assemblés, les éléments de parois 6, 8 et 10 forment la paroi latérale de chacun des logements 2, cette paroi latérale ayant de préférence une section transversale de forme sensiblement carrée, mais pouvant également adopter d'autres formes autorisant le maintien d'un assemblage de combustible de forme différente, telles qu'une forme hexagonale.

Pour permettre à chaque logement 2 de présenter une section transversale de forme sensiblement carrée, quatre éléments de paroi 6, 8 et 10 sont assemblés entre eux de façon à être disposés parallèlement et perpendiculairement les uns par rapport aux autres. A ce titre, on note que les éléments de paroi 6, 8 et 10 sont répartis en trois jeux d'éléments distincts, définis respectivement par un premier jeu d'éléments de paroi, un second jeu d'éléments de paroi, ainsi qu'un jeu d'éléments de paroi périphériques.

Toujours en référence à la figure 1, on voit l'assemblage entre les éléments de paroi 6 du premier jeu d'éléments de paroi, et les éléments de paroi 8 du second jeu d'éléments de paroi. Les éléments 6 sont disposés parallèlement les uns aux autres, au même titre que les éléments 8 entre eux. De plus, les éléments de paroi 6 sont assemblés de manière à être sensiblement perpendiculaires aux éléments de paroi 8.

Notons comme cela est visible sur la figure 1 que dans ce mode de réalisation préféré, les éléments de paroi 6 et 8 s'étendent chacun sur toute la longueur du/des logements 2 qu'ils forment, de façon à ce que chacun d'entre eux constitue l'une des quatre faces latérales planes de la paroi d'un ou de plusieurs logements 2.

Dans le mode de réalisation préféré décrit, le dispositif de rangement 1 comprend sept logements 2, agencés de telle sorte que chacun des deux éléments de paroi 8 ou chacun des deux empilements d'éléments de paroi 8 définisse partiellement la paroi latérale de trois logements 2 à l'aide de l'une de ses faces, ainsi que la paroi latérale de deux logements 2 à l'aide de l'autre de ses faces. De plus, il est précisé que les faces des éléments 8 ou des empilements d'éléments 8, définissant partiellement la paroi latérale de trois logements 2, sont positionnées en regard l'une de l'autre, de manière à ce que les deux éléments 8 ou les deux empilements d'éléments 8 appartiennent à la paroi latérale des trois mêmes logements 2.

Par ailleurs, il est noté que les éléments de paroi 6 et 8 en alliage d'aluminium et de bore forment conjointement une structure centrale 11 du dispositif 1, cette structure centrale 11 constituant d'une part la totalité de la paroi latérale d'un unique logement central 2, et d'autre part une partie de la paroi latérale de six logements périphériques 2. En d'autres termes, comme on peut clairement l'apercevoir sur la figure 1, les éléments de paroi 6 et 8 de la structure principale 11 forment uniquement trois des quatre faces latérales de la paroi latérale des six logements périphériques 2 entourant le logement central 2, la face latérale manquante étant celle permettant d'isoler les logements périphériques 2 par rapport à l'extérieur.

Chacun des éléments de paroi 6 du premier jeu d'éléments de paroi est assemblé sur au moins l'un des éléments de paroi 8 du second jeu d'éléments de paroi.

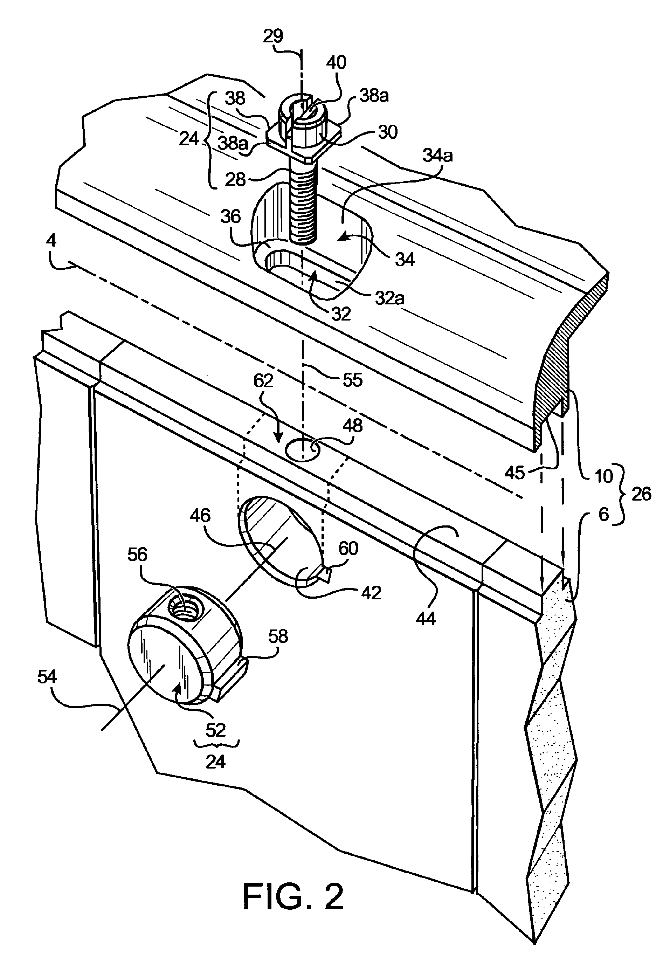

D'autre part, les éléments de paroi 10 du jeu d'éléments de paroi périphériques du dispositif de rangement 1, réalisés en acier inoxydables, sont fixés sur les éléments de paroi 6 et 8, de manière à constituer la face latérale manquante de la paroi latérale des six logements périphériques 6. A titre d'exemple illustratif, on peut prévoir quatre éléments de paroi 10 en acier inoxydable, dont deux d'entre eux assurent chacun la fermeture de deux logements périphériques 2 adjacents. A cet égard, la fixation entre un élément de paroi 10 en acier inoxydable quelconque et un élément de paroi 6,8 en alliage d'aluminium et de bore en contact avec cet élément 10 quelconque, est réalisée à l'aide d'une pluralité de systèmes d'assemblage 24, par exemple espacés selon une direction parallèle à l'axe longitudinal 4 du logement 2 associé. Ces systèmes d'assemblage 24 constituent la particularité de la présente invention. Par conséquent, l'un d'entre eux sera décrit de façon détaillée ci-après, en référence à la figure 2.

A présent en référence à la figure 2, on voit un ensemble 26 formé par un élément de paroi 6 en alliage d'aluminium et de bore, et un élément de paroi périphérique 10 en acier inoxydable destiné à être assemblé et en contact avec ce même élément 6. Les éléments 6 et 10, agencés perpendiculairement, sont fixés l'un à l'autre par l'intermédiaire d'une pluralité de systèmes d'assemblage 24 (un seul étant représenté sur cette figure 2). Bien entendu, il est à comprendre que tout ensemble de la figure 1, constitué d'un élément de paroi 6,8 assemblé et en contact avec un élément de paroi 10, peut être assimilé à l'ensemble 26 dont l'un des systèmes d'assemblage 24 associé va à présent être détaillé.

Le système d'assemblage 24 comporte tout d'abord une vis en acier inoxydable 28 dont une tête 30 est en butée contre l'élément de paroi 10. Plus précisément, la vis 28, disposée sensiblement perpendiculairement à l'élément de paroi 10, traverse un trou oblong 32 pratiqué dans l'épaisseur de ce même élément 10. Le trou oblong 32 présente deux faces parallèles 32a agencées d'une part sensiblement parallèlement à l'axe longitudinal 4 du logement 2 formé notamment par les éléments 6 et 10 représentés, et d'autre part sensiblement perpendiculairement à un plan fictif (non représenté) défini par l'élément de paroi 10.

Un autre trou oblong 34 est également réalisé dans une partie de l'épaisseur de l'élément de paroi 10, de façon superposée au trou oblong 32, et bien entendu de manière à ce qu'il dispose d'une longueur et d'une largeur de grandeurs plus élevées que celles du trou oblong 32. D'autre part, ce trou oblong 34 présente aussi deux faces parallèles 34a agencées sensiblement parallèlement aux faces 32a du trou 32, et dont la distance les séparant est supérieure à la distance séparant ces mêmes deux faces 32a. A cet égard, il est indiqué que la distance séparant les deux faces parallèles 34a est de préférence supérieure à un diamètre de la tête 30 de la vis 28.

Par conséquent, comme cela apparaît clairement sur la figure 2, la superposition des deux trous oblongs 32,34 fait apparaître une surface d'épaulement 36 prenant grossièrement la forme de deux bandes identiques parallèles raccordées à leurs extrémités par deux demi-anneaux, cette surface 36 étant parallèle au plan fictif susmentionné. Ainsi, c'est sur cette surface d'épaulement 36 que vient buter la tête 30 de la vis 28 en acier inoxydable.

Plus précisément, c'est une rondelle anti-rotation 38 du système 24, agencée en butée sous la tête de vis 30, qui vient buter contre la surface d'épaulement 36 de l'élément de paroi 10. Comme on peut le voir sur la figure 2, cette rondelle anti-rotation 38 présente globalement une forme de carré prévue pour que deux côtés opposés 38a de ce carré épousent respectivement les deux faces parallèles 34a du trou oblong 34. De cette façon, la rondelle 38 ne peut pas tourner par rapport à l'élément de paroi 10. En outre, la rondelle anti-rotation 38 est également pourvue d'une languette 40 solidaire d'un côté quelconque du carré, qui une fois recourbée comme représenté sur la figure 2, peut reposer dans une rainure (non référencée) prévue dans la tête de vis 30. De cette manière, la vis 28 ne peut pas pivoter par rapport à la rondelle 38, et ne peut par conséquent pas non plus tourner par rapport à l'élément de paroi 10.

A titre indicatif, une ou plusieurs rondelles de dilatation (non représentées) auraient également pu être placées entre la tête de vis 30 et la surface d'épaulement 36, sans sortir du cadre de l'invention.

Par ailleurs, il est réalisé un logement de noix 42 dans l'élément de paroi 6, à proximité d'un chant longitudinal 44 de cet élément 6, ce chant longitudinal 44 étant celui destiné à venir au contact de l'élément de paroi 10 en acier inoxydable. A ce titre, il est précisé que le chant 44 peut présenter une forme complémentaire de celle d'une rainure 45 prévue dans l'élément de paroi 10, de manière à renforcer la fixation entre ces éléments 6 et 10.

Le logement de noix 42, pratiqué dans l'épaisseur de l'élément de paroi 6, peut indifféremment être débouchant ou traversant, et dispose par exemple d'une forme cylindrique de section circulaire d'axe 46, perpendiculaire à un axe de vis 29. De plus, un passage 48 pratiqué dans l'élément de paroi 6 débouche d'une part au niveau du chant longitudinal 44, et d'autre part à l'intérieur du logement de noix 42. Ainsi, il est de préférence prévu que ce passage 48 soit cylindrique de section circulaire d'un diamètre inférieur à celui de la section du logement de noix 42, et également que ce passage 48 dispose d'un axe 50 sécant et perpendiculaire à l'axe 46 de ce logement de noix 42.

Le système d'assemblage 24 présente alors une noix 52 en acier inoxydable, de préférence de forme complémentaire de celle du logement de noix 42, cette noix 52 étant insérée à l'intérieur de ce même logement 42. Par conséquent, la noix 52 prend la forme d'un cylindre de section en forme de disque, et d'axe 54 confondu avec l'axe 46 du logement 42.

La noix 52 présente un trou taraudé 56 recevant la vis en acier inoxydable 28, ce trou taraudé 56 étant indifféremment traversant ou débouchant, et par exemple orienté selon un diamètre de la noix 52 en forme de cylindre. Naturellement, la noix 52 est positionnée à l'intérieur du logement de noix 42 de sorte que le trou taraudé 56 se trouve en regard et dans le prolongement du passage 48, comme cela est représenté sur la figure 2. De cette manière, la vis 28 peut traverser le passage 48 de diamètre plus important, et être vissée dans le trou taraudé 56.

Pour s'assurer qu'un tel positionnement angulaire de la noix 52 est obtenu, il est possible de prévoir une saillie 58 sur la noix 52, ainsi qu'une rainure 60, de préférence de forme complémentaire, dans le logement de noix 42.

Par conséquent, avec l'agencement qui vient d'être décrit ci-dessus, on s'aperçoit que la vis 28 et la noix 52 réalisés en acier inoxydable ne subissent pas de dilatation différentielle, de sorte que la liaison mécanique qu'ils procurent reste conservée même lorsque le dispositif de rangement 1 est soumis à de fortes températures.

D'autre part, lors des fortes sollicitations thermiques, la liaison mécanique procurée par le système d'assemblage 24 est même renforcée, puisqu'une portion 62 de l'élément de paroi 6 (délimitée en pointillés sur la figure 2), située entre l'élément de paroi 10 et la noix 52, a tendance à se dilater et par conséquent à contraindre encore davantage le système vis/noix 28,52.

Enfin, il est précisé que les trous oblongs 32 et 34 prévus dans l'élément de paroi 10 permettent à la vis 28 de se déplacer selon la direction parallèle à l'axe longitudinal 4 du logement 2, de manière à faire face à la dilatation différentielle susceptible d'être observée entre les deux éléments de paroi 6 et 10 réalisés dans des matériaux différents.

Bien entendu, diverses modifications peuvent être apportées par l'homme du métier au dispositif de rangement 1 qui vient d'être décrit, uniquement à titre d'exemple non limitatif.

## Revendications

1. Dispositif de rangement (1) prévu pour être placé dans un emballage destiné au transport de matières radioactives, ledit dispositif comprenant une pluralité de logements (2) s'étendant chacun selon un axe longitudinal (4) et dont au moins l'un d'entre eux dispose d'une paroi latérale formée au moins en partie à l'aide d'un élément de paroi en acier inoxydable (10) assemblé à un élément de paroi en aluminium ou dans l'un de ses alliages (6,8) par l'intermédiaire d'au moins un système d'assemblage (24) comportant une vis en acier inoxydable (28) traversant ledit élément de paroi en acier inoxydable (10) et étant en butée contre celui-ci,
**caractérisé en ce que** ledit système d'assemblage (24) comprend en outre une noix en acier inoxydable (52) agencée dans un logement de noix (42) prévu dans ledit élément de paroi en aluminium ou dans l'un de ses alliages (6,8), ladite noix (52) présentant un trou taraudé (56) coopérant avec ladite vis en acier inoxydable (28), et étant agencée en butée dans son logement contre une partie (62) dudit élément de paroi en aluminium ou dans l'un de ses alliages (6,8), cette partie (62), située entre l'élément de paroi en acier inoxydable (10) et ladite noix (52), présentant un passage (48) traversé par ladite vis (28) et communiquant avec ledit logement (42).

2. Dispositif de rangement (1) selon la revendication 1, **caractérisé en ce que** la vis en acier inoxydable (28) traverse un trou oblong (32) prévu dans ledit élément de paroi en acier inoxydable (10), le trou oblong (32) présentant deux faces parallèles (32a) agencées sensiblement parallèlement à l'axe longitudinal (4) du logement (2).

3. Dispositif de rangement (1) selon la revendication 1 ou la revendication 2, **caractérisé en ce que** ledit système d'assemblage (24) comporte en outre une rondelle anti-rotation (38) interposée entre une tête (30) de la vis en acier inoxydable (28) et ledit élément de paroi en acier inoxydable (10).

4. Dispositif de rangement (1) selon l'une quelconque des revendications précédentes, **caractérisé en ce que** ledit système d'assemblage (24) comporte en outre une rondelle de dilatation interposée entre une tête (30) de la vis en acier inoxydable (28) et ledit élément de paroi en acier inoxydable (10).

5. Dispositif de rangement (1) selon l'une quelconque des revendications précédentes, **caractérisé en ce que** ladite noix (52) comprend une saillie (58) coopérant avec une encoche (60) pratiquée dans le logement de noix (42).

6. Dispositif de rangement (1) selon l'une quelconque des revendications précédentes, **caractérisé en ce que** ladite noix (52) est un cylindre de section en forme de disque, et d'axe (54) perpendiculaire à un axe (29) de ladite vis en acier inoxydable (28).

7. Dispositif de rangement (1) selon l'une quelconque des revendications précédentes, **caractérisé en ce qu'**il comprend une structure centrale (11) réalisée à l'aide d'une pluralité d'éléments de paroi en aluminium ou dans l'un de ses alliages (6,8), ladite structure centrale (11) constituant notamment, de façon partielle, la paroi latérale d'une pluralité de logements périphériques (2), et **en ce que** la paroi latérale desdits logements périphériques (2) est également constituée par des éléments de paroi périphériques en acier inoxydable (10).

8. Dispositif de rangement (1) selon la revendication 7, **caractérisé en ce qu'**une pluralité de systèmes d'assemblage (24) est prévue entre chaque ensemble (26) formé par un élément de paroi en aluminium ou dans l'un de ses alliages (6,8), et un élément de paroi périphérique en acier inoxydable (10) en contact avec celui-ci.

9. Dispositif de rangement (1) selon l'une quelconque des revendications précédentes, **caractérisé en ce que** chaque élément de paroi en aluminium ou dans l'un des ses alliages (6,8) est réalisé dans un alliage d'aluminium et de bore.

## Claims

1. A rack arrangement (1) intended to be placed in a package intended for transporting radioactive materials, said arrangement comprising a plurality of housings (2) each extending along a longitudinal axis (4) and at least one of which among them has a sidewall formed at least in part with a stainless wall element (10) assembled to a wall element in aluminium or in one its alloys (6, 8) via at least one assembly system (24) including a screw in stainless steel (28) passing through said wall element in stainless steel (10) and being in abutment against the latter,
**characterized in that** said assembly system (24) further comprises a sprocket in stainless steel (52) laid out in a sprocket housing (42) provided in said wall element in aluminium or in one of its allows (6,8), said sprocket (52) having a tapped hole (56) cooperating with said screw in stainless steel (28), and being laid out in its housing in abutment against a portion (62) of said wall element in aluminium or in one of its alloys (6, 8), this portion (62), located between the wall element in stainless steel (10) and said sprocket (52), having a passage (48) crossed by said screw (28) and communicating with said housing (42).

2. The rack arrangement (1) according to claim 1, **characterized in that** the screw in stainless steel (28) crosses an oblong hole (32) provided in said wall element in stainless steel (10), the oblong hole (32) having two parallel faces (32a) laid out substantially parallel to the longitudinal axis (4) of the housing (2).

3. The rack arrangement (1) according to claim 1 or claim 2, **characterized in that** said assembling system (24) further includes an anti-rotation washer (38) interposed between a head (30) of the screw in stainless steel (28) and said wall element in stainless steel (10).

4. The rack arrangement (1) according to any of the preceding claims, **characterized in that** said assembling system (24) further includes an expansion washer interposed between a head (30) of the stainless screw (28) and said wall element in stainless steel (10).

5. The rack arrangement (1) according to any of the preceding claims, **characterized in that** said sprocket (52) comprises a protrusion (58) co-operating with a notch (60) made in the sprocket housing (42).

6. The rack arrangement (1) according to any of the preceding claims, **characterized in that** said sprocket (52) is a cylinder with a disk-shaped section, and with an axis (54) perpendicular to an axis (29) of said stainless steel screw (28).

7. The rack arrangement (1) according to any of the preceding claims, **characterized in that** it comprises a central structure (11) made with a plurality of wall elements in aluminium or in one of its alloys (6, 8), said central structure (11) notably partly forming the sidewall of a plurality or peripheral housings (2), and **in that** the sidewall or said peripheral housings (2) is also formed with peripheral wall elements in stainless steel (10).

8. The rack arrangement (1) according to claim 7, **characterized in that** a plurality of assembling systems (24) is provided between each assembly (26) formed by a wall element in aluminium or in one of its alloys (6, 8), and a peripheral wall element in stainless steel (10) in contact with the latter.

9. The rack arrangement (1) according to any of the preceding claims, **characterized in that** each wall element in aluminium or in once of its alloys (6, 8) is made in an alloy of aluminium and of boron.

## Patentansprüche

1. Ordnungsvorrichtung (1), die dazu vorgesehen ist, in einer Verpackung platziert zu werden, welche zum Transport von radioaktiven Stoffen bestimmt ist, wobei die Vorrichtung eine Mehrzahl von Aufnahmen (2) umfasst, die sich jeweils gemäß einer Längsachse (4) erstrecken und von denen wenigstens eine eine Seitenwand aufweist, welche wenigstens teilweise mit Hilfe eines Wandelements aus Edelstahl (10) gebildet ist, welches an einem Wandelement aus Aluminium oder einer seiner Legierungen (6, 8) unter Vermittlung wenigstens eines Montagesystems (24) montiert ist, welches eine Schraube aus Edelstahl (28) umfasst, die das Wandelement aus Edelstahl (10) durchsetzt und sich in Anlage gegen dieses befindet,
**dadurch gekennzeichnet, dass** das Montagesystem (24) ferner eine Muffe (französisch: une noix) aus Edelstahl (52) umfasst, welche in einer Muffenaufnahme (42) angeordnet ist, die in dem Wandelement aus Aluminium oder einer seiner Legierungen (6, 8) vorgesehen ist, wobei die Muffe (52) ein Gewindeloch (56) aufweist, das mit der Schraube aus Edelstahl (28) zusammenwirkt, und in ihrer Aufnahme in Anlage gegen einen Anschnitt (62) des Wandelements aus Aluminium oder einer seiner Legierungen (6, 8) angeordnet ist, wobei dieser Abschnitt (62), welcher zwischen dem Wandelement aus Edelstahl (10) und der Muffe (52) angeordnet ist, einen Durchgang (48) aufweist, der von der Schraube (28) durchsetzt ist und mit der Aufnahme (42) in Verbindung steht.

2. Ordnungsvorrichtung (1) nach Anspruch 1, **dadurch gekennzeichnet, dass** die Schraube aus Edelstahl (28) ein Langloch (32) durchsetzt, welches in dem Wandelement aus Edelstahl (10) vorgesehen ist, wobei das Langloch (32) zwei parallele Seiten (32a) aufweist, welche im Wesentlichen parallel zu der Längsachse (4) der Aufnahme (2) angeordnet sind.

3. Ordnungsvorrichtung (1) nach Anspruch 1 oder Anspruch 2, **dadurch gekennzeichnet, dass** das Montagesystem (24) ferner eine Drehhemmungsscheibe (38) umfasst, die zwischen einem Kopf (30) der Schraube aus Edelstahl (28) und dem Wandelement aus Edelstahl (10) angeordnet ist.

4. Ordnungsvorrichtung (1) nach einem der vorhergehenden Ansprüche, **dadurch gekennzeichnet, dass** das Montagesystem (24) ferner eine Dehnungsscheibe umfasst, die zwischen einem Kopf (30) der Schraube aus Edelstahl (28) und dem Wandelement aus Edelstahl (10) angeordnet ist.

5. Ordnungsvorrichtung (1) nach einem der vorhergehenden Ansprüche, **dadurch gekennzeichnet, dass** die Muffe (52) einen Vorsprung (58) umfasst, der mit einer Einkerbung (60) zusammenwirkt, die in der Muffenaufnahme (42) vorgesehen ist.

6. Ordnungsvorrichtung (1) nach einem der vorhergehenden Ansprüche, **dadurch gekennzeichnet, dass** die Muffe (52) ein Zylinder mit scheibenförmigem Schnitt ist und eine Achse (54) aufweist, die senkrecht zu einer Achse (29) der Schraube aus Edelstahl (28) ist.

7. Ordnungsvorrichtung (1) nach einem der vorhergehenden Ansprüche, **dadurch gekennzeichnet, dass** sie eine zentrale Struktur (11) umfasst, welche mit Hilfe einer Mehrzahl von Wandelementen aus Aluminium oder einer seiner Legierungen (6, 8) gebildet ist, wobei die zentrale Struktur (11) insbesondere teilweise die Seitenwand einer Mehrzahl von Umfangsaufnahmen (2) bildet, und dass die Seitenwand der Umfangsaufnahmen (2) ebenfalls von Umfangswandelementen aus Edelstahl (10) gebildet ist.

8. Ordnungsvorrichtung (1) nach Anspruch 7, **dadurch gekennzeichnet, dass** eine Mehrzahl von Montagesystemen (24) zwischen jeder von einem Wandelement aus Aluminium oder einer seiner Legierungen (6, 8) gebildeten Anordnung (26) und einem Umfangswandelement aus Edelstahl (10), welches in Kontakt damit steht, vorgesehen ist.

9. Ordnungsvorrichtung (1) nach einem der vorhergehenden Ansprüche, **dadurch gekennzeichnet, dass** jedes Wandelement aus Aluminium oder einer seiner Legierungen (6, 8) aus einer Legierung aus Aluminium und Bor gebildet ist.
